# EUROPÄISCHE PATENTANMELDUNG

(11) **EP 1 164 450 A1**
(43) Veröffentlichungstag der Anmeldung: **19.12.2001**
(21) Anmeldenummer: 01110922.0
(22) Anmeldetag: 05.05.2001
(51) Int. Cl.: G05B 23/02

(54) **Überwachungseinrichtung für mindestens einen Zustandsparameter eines Objekts**

(30) Priorität: 14.06.2000 DE 10029182
(71) Anmelder: HANSA METALLWERKE AG, 70567 Stuttgart (DE)
(72) Erfinder: Kunkel, Horst, 70199 Stuttgart (DE)
(74) Vertreter: Ostertag, Ulrich, Dr.

(57) **Zusammenfassung**

Eine Überwachungseinrichtung (1) für mindestens einen Zustandsparameter eines Objekts (2) weist mindestens einen Sensor (3) zur Erfassung des Zustandsparameters auf. Weiterhin ist mindestens eine mit dem Sensor (3) in Signalverbindung stehende Übertragungseinrichtung (10) für die gemessenen Zustandsparameter bzw. für diesen zugeordnete Informationen vorgesehen. Mindestens eine Umsetzeinrichtung (11) setzt die vom Sensor (3) empfangenen Zustandsparameter-Daten in grafische Darstellungen (16) um. Zur Ausgabe dieser grafischen Darstellungen (16) ist mindestens eine mit der Übertragungseinrichtung (10) drahtlos in Signalverbindung stehende Mobilfunkeinrichtung (14, 19) vorgesehen. Letztere umfaßt ein Display (15). Mit der Überwachungseinrichtung (1) ist eine Objektüberwachung auch für einen mobilen Benutzer möglich.

## Beschreibung

Die Erfindung betrifft eine Überwachungseinrichtung für mindestens einen Zustandsparameter eines Objekts mit mindestens einem Sensor zur Erfassung des Zustandsparameters und mindestens einer mit dem Sensor in Signalverbindung stehenden Übertragungseinrichtung für die gemessenen Zustandsparameter bzw. für Informationen, die diesen zugeordnet sind.

Derartige Überwachungseinrichtungen sind vom Markt her bekannt. Die erfaßten Zustandsparameter werden zwischengespeichert und können später ausgelesen werden. Für eine Person, die unabhängig von dem zu überwachenden Objekt unterwegs ist, war bislang die Benutzung einer derartigen bekannten Überwachungseinrichtung nicht möglich.

Es ist daher die Aufgabe der vorliegenden Erfindung, eine Überwachungseinrichtung der eingangs genannten Art derart weiterzubilden, daß eine mobile Überwachung möglich ist.

Diese Aufgabe wird erfindungsgemäß gelöst durch eine Überwachungseinrichtung mit mindestens einer Umsetzeinrichtung, die die vom Sensor empfangenen Zustandsparameter-Daten in grafische Darstellungen umsetzt, und mindestens eine mit der Übertragungseinrichtung drahtlos in Signalverbindung stehende Mobilfunkeinrichtung, die ein Display zur Ausgabe von grafischen Darstellungen aufweist.

Eine Mobilfunkeinrichtung mit einem Display kann vom Benutzer mitgeführt und auch dann eingesetzt werden, wenn dieser unterwegs ist. Mit Hilfe der im Bedarfsfall dargestellten grafischen Darstellung ist der Benutzer schnell und umfassend über den Zustand des Objekt informiert. Dadurch ist eine effiziente Überwachung gegeben. Als grafische Darstellung kann beispielsweise ein y/t-Diagramm dienen. Ergänzend kann, ggf. auf Abruf, auch eine Textübertragung zur detaillierten Zustandsbeschreibung erfolgen.

Bevorzugt weist die Umsetzeinrichtung auf: Einen Speicher, in dem dem Zustandsparameter zugeordnete Toleranzwerte und eine Mehrzahl digitaler grafischer Darstellungen abgelegt sind; eine Vergleichseinrichtung, die mit dem Sensor und dem Speicher in Signalverbindung steht und die vom Sensor übermittelten Zustandsparameter-Daten mit den Toleranzwerten vergleicht; und eine Auswahleinrichtung zur vom Vergleichsergebnis abhängigen Auswahl der grafischen Darstellungen aus einem Speicher. Eine derartige Umsetzeinrichtung kann mit konventionellen Hardware-Komponenten und in bekannter Weise zu erstellender Software realisiert werden. Der Speicher kann beispielsweise wiederbeschreibbar sind, was die Flexibilität der Überwachungseinrichtung nochmals erhöht. Wird der Vergleichsalgorithmus als EDV-Programm realisiert, kann dieser bei Bedarf einfach an die Zustandsgegebenheiten angepaßt werden. So kann ein Vergleichsalgorithmus im einfachsten Fall durch Differenzbildung zwischen einem Ist- und einem Sollwert eines Zustandsparamters realisiert werden. Für andere Anwendungen kann beispielsweise die Geschwindigkeit der Zustandsparameteränderung bestimmt und mit einem vorgegebenen Sollwert verglichen werden. Natürlich sind beliebige andere Vergleichsalgorithmen sowie auf analogen Schaltungen basierende Vergleichseinrichtungen denkbar.

Die Umsetzeinrichtung kann am Objekt angeordnet sein. In diesem Fall kann die Mobilfunkeinrichtung einfach aufgebaut sein, da dort nur noch die Darstellung der übertragenen grafischen Darstellung zu erfolgen braucht.

Alternativ kann die Umsetzeinrichtung an der mindestens einen Mobilfunkeinrichtung angeordnet sein. Dies vereinfacht die Ausführung der am Sensor angebrachten Komponenten der Überwachungseinrichtung, da dort keine Auswahl der Graphik erfolgen muß.

Bevorzugt arbeitet dabei die Übertragungseinrichtung mit einem Zwischenspeicher für zu übertragende Zustandsparameter-Daten zusammen. Dies stellt sicher, daß auch dann keine gemessenen Zustandsparameter-Daten verloren gehen, wenn während eines gewissen Zeitraums keine Übertragung an die Mobilfunkeinrichtung, z.B. wegen eines Funklochs, möglich ist.

Eine dritte Ausführungsform der Umsetzeinrichtung ist dergestalt, daß die Vergleichseinrichtung an dem Objekt und die Auswahleinrichtung an der mindestens einen Mobilfunkeinrichtung angeordnet ist, wobei die Vergleichseinrichtung und die Auswahleinrichtung über die Übertragungseinrichtung miteinander in Signalverbindung stehen.
Durch eine derartige Ausgestaltung der Umsetzeinrichtung kann beispielsweise erreicht werden, daß nur dann Zustandsparameter übertragen werden, wenn dies aufgrund des Vergleichsergebnisses, das durch die Vergleichseinrichtung gewonnen wird, erforderlich wird. Dies ist in der Regel dann der Fall, wenn vorgegebene Toleranzbereiche von den Zustandsparameterdaten verlassen werden. Eine derartige Ausführung reduziert die zu übertragende Datenmenge erheblich.

Bevorzugt ist die Übertragungseinrichtung zur Übertragung von Codes ausgeführt, die von der Vergleichseinrichtung erzeugt werden. In diesem Falle werden keine Zustandsparameter-Daten, sondern ein dem jeweiligen Objektzustand zugeordneter Code übertragen, der in der Mobilfunkeinrichtung eine dort abgespeicherte grafische Darstellung abruft und auf dem Display zur Anzeige bringt. Durch die Code-Übertragung wird die an die Mobilfunkeinrichtung zu übertragende Datenmenge nochmals reduziert. Durch die eindeutig erfolgende Zuordnung einer grafischen Darstellung zu einem übertragenen Code bleibt die Überwachungsfunktion gewährleistet.

Die den Zustandsparametern zugeordneten Informationen, die von der Übertragungseinrichtung übertragen werden, umfassen vorzugsweise Applets. Applets sind kleine Programme, die im Rahmen der Darstellung der grafischen Darstellungen abgearbeitet werden und z.B. eine visuelle Hervorhebung bestimmter dargestellter Komponenten, z.B. durch Blinken oder Farbänderungen, hervorrufen können. Die Verwendung derartiger Applets erweitert den Einsatzbereich der Überwachungseinrichtung, ohne daß die Anforderungen an das Display der Mobilfunkeinrichtung hinsichtlich der darstellbaren Auflösung zu groß werden.

Bevorzugt sind die grafischen Darstellungen Piktogramme. Derartige Darstellungen erfordern nur geringen Speicherplatz und können auch mit nur geringen Datendurchsatz ermöglichenden Übertragungswegen mit ausreichender Geschwindigkeit übertragen werden. Durch geeignete Wahl der Piktogramme läßt sich zudem eine gute Darstellbarkeit auch auf kleinen Displays erzielen.

Die Mobilfunkeinrichtung kann ein WAP-Handy sein. Derartige Handys weisen ein relativ großes Display auf, wodurch die Darstellungsmöglichkeiten für die Überwachungseinrichtung erweitert werden. Gleichzeitig lassen sich über ein WAP-Handy durch die Anbindung an das Internet zusätzliche Informationen, die im Rahmen der Überwachung nützlich sein können, abrufen.

Alternativ kann die Mobilfunkeinrichtung ein tragbarer Computer mit einem Funkmodem sein, insbesondere ein Laptop oder ein Palmtop. Ein tragbarer Computer weist eine hohe Rechenleistung auf, was den Betrieb der Überwachungseinrichtung vereinfacht und z.B. die Darstellungsmöglichkeiten erweitert.

Der Computer kann dabei einen digitalen Stift aufweisen, der mit einem Display des Computers zusammenarbeitet.
Mit derartigen Stiften ist z.B. eine handschriftliche Dateneingabe möglich. Eine Datenausgabe kann durch Zeigen mit dem Stift auf einen bestimmten Displaybereich initiiert werden. Mit einem derartigen Computer kann die Überwachungseinrichtung zusätzlich flexibilisiert weden.

Die mindestens eine Überwachungseinrichtung und/oder die mindestens eine Mobilfunkeinrichtung kann mit einer Zentralstation zur Datendokumentation in Signalverbindung stehen. Für bestimmte Anwendungen der Objektüberwachung ist eine nachträgliche Dokumentation des Objektzustands erforderlich. Hierunter fällt beispielsweise die Lagerung von Lebensmitteln. In einer Zentralstation können auf einfache Weise die Daten einer Mehrzahl von Objekten abgelegt und bei Bedarf weiterverarbeitet werden.

Die Zentralstation kann einen Datenbankspeicher zur Ablage von zusätzlichen Objektinformationen aufweisen.

Diese zusätzlichen Objektinformationen können bei Bedarf an die Mobilfunkeinrichtung übertragen bzw. von dieser abgerufen werden. Auf diese Weise sind zu bestimmten Objektzuständen gezielt zusätzliche Informationen mobil abrufbar.

Die Übertragungseinrichtung und/oder die Mobilfunkeinrichtung einerseits und die Zentralstation andererseits können so ausgeführt sein, daß die Signalverbindung und der Informationsabruf über das Internet erfolgen. Auf diese Weise kann ein schon bestehendes Datennetz zum Datentransfer eingesetzt werden.

Ausführungsbeispiele der Erfindung werden nachfolgend anhand der Zeichnung näher erläutert; es zeigen:
- Figur 1: den schematischen Aufbau einer erfindungsgemäßen Überwachungseinrichtung; und
- Figuren 2 und 3: den schematischen Aufbau von alternativen Überwachungseinrichtungen.

In der Zeichnung sind drahtlose Signalwege durch geschwungene Pfeile dargestellt. Übergeordnete Komponenten, die mehrere als Blöcke dargestellte Einzelkomponenten umfassen, sind in gestrichelten Blöcken zusammengefaßt.

Die in der Zeichnung schematisch dargestellten Überwachungseinrichtungen dienen zur mobilen Überwachung des Ist-Zustands von Objekten. Beispiele für derartige Objekte sind Produktions- oder Betriebsanlagen, Kühlhäuser, Anlagen der chemischen Verfahrenstechnik oder auch Fahrzeuge zum Warentransport. Unter einem Transportfahrzeug wird hierbei allgemein jedes Land-, Wasser- oder Luftfahrzeug verstanden.

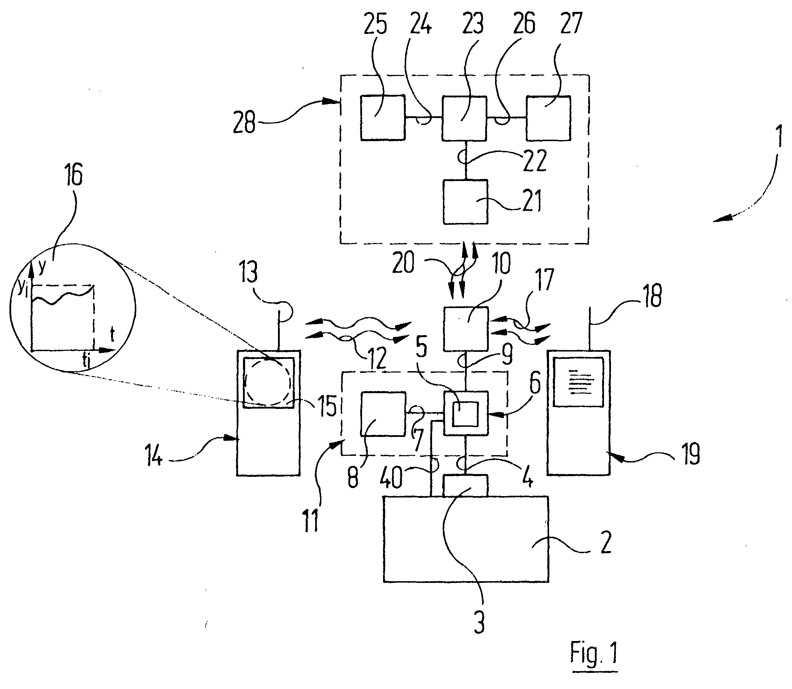

Bei der in Figur 1 insgesamt mit dem Bezugszeichen 1 bezeichneten Überwachungseinrichtung ist an das zu überwachende Objekt 2 ein Sensor 3 angekoppelt. Je nach dem zu überwachenden Zustandsparameter handelt es sich beim Sensor 3 z. B. um ein Thermometer, ein Barometer, eine Waage, ein Hygrometer oder einen chemischen Sensor.

Der Sensor 3 steht über eine Signalleitung 4 mit einer einen Mikroprozessor 5 aufweisenden Vergleichs/Auswahleinrichtung 6 in Signalverbindung.

Über eine Signalleitung 7 steht die Vergleichs/Auswahleinrichtung 6 mit einem Speicher 8 in Verbindung. Eine weitere Signalleitung 9 verbindet die Vergleichs/Auswahleinrichtung 6 mit einer Übertragungseinrichtung 10.

Die Vergleichs/Auswahleinrichtung 6, der Speicher 8 und die Übertragungseinrichtung 10 sind Bestandteile einer Umsetzeinrichtung 11.

Über einen drahtlosen Signalweg 12 steht die Übertragungseinrichtung 10 mit einer Antenne 13 eines Hinweis-Handys 14 in Verbindung. Letzteres ist als WAP-Handy ausgeführt und weist ein großes Display 15 auf. Eine mit dem Display 15 darstellbare Grafik 16 ist in Figur 1 mittels einer Lupendarstellung vergrößert gezeigt. Die Grafik 16 wird später noch näher erläutert.

Über einen drahtlosen Signalweg 17 steht die Übertragungseinrichtung 10 mit der Antenne 18 eines Service-Handys 19 in Verbindung, das zum Hinweis-Handy 14 baugleich ist.

Schließlich ist die Übertragungseinrichtung 10 über einen weiteren drahtlosen Signalweg 20 mit einer Sende/ Empfangseinrichtung 21 verbunden. Letztere steht über einen Signalweg 22 mit einem Rechner 23, z. B. dem Prozessor eines PC, in Verbindung. Über eine Signalleitung 24 ist der Rechner mit einem Speicher 25 und über eine Signalleitung 26 mit einer Datenbank 27 verbunden.

Die Sende/Empfangseinrichtung 21, der Rechner 23, der Speicher 25 sowie der Datenbankspeicher 27 sind Bestandteile einer ortsfesten Zentralstation 28.

Die Überwachung des Zustands des Objekts 2 funktioniert folgendermaßen:
Der Sensor 3 mißt ständig oder in vorgegebenen Zeitabständen den oder die Zustandsparameter des Objekts 2. Die gemessenen Zustandsparameter-Daten werden anschließend an die Vergleichs/Auswahleinrichtung 6 übertragen. Diese vergleicht die übertragenen Zustandsparameter-Daten mit Toleranzwerten, die im Speicher 8 abgelegt sind und von dort von der Vergleichs/Auswahleinrichtung 6 abgerufen werden. Im Rahmen des Vergleichs arbeitet der Mikroprozessor 5 einen vorgegebenen Vergleichsalgorithmus ab, der im einfachsten Fall in einer Differenzbildung zwischen den aktuell vom Sensor 3 übertragenen Zustandsparameter-Daten und den abgespeicherten Toleranzwerten besteht. Ergibt der Vergleich, daß die aktuellen Zustandsparameter-Daten einen durch die gespeicherten Toleranzwerte vorgegebenen Bereich verlassen haben, wählt der Mikroprozessor 5 abhängig von dem Vergleichsergebnis aus dem Speicher 8 eine von mehreren dort abgelegten grafischen Darstellungen 16 aus, die noch beschrieben wird.

Die gewählte grafische Darstellung 16 wird über die Vergleichs/Auswahleinrichtung 6 vom Speicher 8 an die Übertragungseinrichtung 10 übermittelt, von dort an das Hinweis-Handy 14 gesendet und auf dessen Display 15 dargestellt. Zusätzlich zur reinen Darstellung der Grafik 16 kann im Rahmen der zugehörigen Datenübermittlung auf dem Signalweg 12 eine Hinweisfunktion des Hinweis-Handys 14, z. B. eine Vibrationsmeldung oder ein akustischer oder optischer Alarm, ausgelöst werden, so daß der Benutzer des Hinweis-Handys 14 auf die Übertragung aufmerksam gemacht wird.

Die in der Figur 1 gezeigte Grafik 16 ist ein y/t-Diagramm, d. h. sie zeigt den zeitlichen Verlauf des Zustandsparameters y über die Zeit t. Zusätzlich sind in der Grafik 16 auch noch ein Toleranzwert yᵢ sowie der Zeitpunkt tᵢ, an dem der Toleranzwert yᵢ überschritten wurde, dargestellt, so daß sich der Benutzer über die aktuelle Situation des Zustandsparameters y, z.B. der Momentantemperatur eines Kühlhauses, schnell informieren kann.

Statt eines y/t-Diagramms kann die übermittelte Grafik 16 je nach überwachtem Zustandsparameter und nach dem aktuellen Vergleichsergebnis auch eine andere Darstellungsform aufweisen. Beispiele für derartige Darstellungsformen sind ein Histogramm, ein Balkendiagramm oder ein Piktogramm. Im Falle einer Temperaturüberwachung kann das Piktogramm bei Temperaturunterschreitung z.B. ein Eiskristall sein.

Zusätzlich zur Grafik 16 kann über den Signalweg 12 noch Hinweistext übertragen werden, den der Benutzer über ein (nicht dargestelltes) Bedienfeld des Hinweis-Handys 14 abrufen kann, um sich zusätzlich zur Grafik 16 noch umfassender zu informieren. Zusätzlich können bei Bedarf durch den Benutzer noch weitere Grafiken zur Statusinformation abgerufen werden.

Über den bidirektionalen Signalweg 12 kann der Benutzer des Hinweis-Handys 14 z. B. über eine SMS-Nachricht der Umsetzeinrichtung 11 einen Steuerbefehl zuleiten, der im Prozessor 5 verarbeitet wird und über eine Steuerleitung 40 eine entsprechende Konfigurationsänderung des Objekts 2 vornimmt, um der Änderung des Zustandsparameters entgegenzuwirken. Ist das Objekt 2 beispielsweise ein Kühlhaus mit darin gelagerter Ware, kann eine derartige Ansteuerung darin bestehen, daß bei Überschreiten eines Temperatur-Toleranzwertes und dadurch ausgelöste Darstellung eines geeigneten Piktogramms auf dem Display 15 des Hinweis-Handys 14, z.B. eines sich in einen Tropfen umwandelnden Eiskristalls, über das Hinweis-Handy 14 eine Erhöhung der Kühlleistung des Kühlhauses vom Benutzer initiiert wird.

Liegen besonders kritische Zustandsparameter vor, wird über den Signalweg 17 das zusätzliche Service-Handy 19, das von einem Service-Techniker benutzt wird, angerufen. Dazu werden dem Service-Techniker detaillierte Angaben als SMS-Nachrichtentext übermittelt. Der Service-techniker kann dann vor Ort die erforderlichen Maßnahmen ergreifen.

Zusätzlich zeichnet die Zentralstation 28 über den Signalweg 20 ständig die von der Umsetzeinrichtung 11 übermittelten Zustandsparameter-Daten zur Dokumentation und weiteren Auswertung auf. Diese Zustandsparameter-Daten werden im Speicher 25 abgelegt und können bei Bedarf nachbearbeitet werden.

Für die Handys 14, 19 dient die Übertragungseinrichtung 10 zusätzlich als Vermittlungsstation zur Verbindung der Handys 14, 19 mit der Zentralstation 28. Über diese Verbindung können die Handybenutzer aus dem Speicher 25 und dem Datenbankspeicher 27 zusätzliche Informationen über den Objektzustand sowie über zu ergreifende Maßnahmen abrufen. Der Servicetechniker kann auf diesem Weg z. B. Detailinformationen zu Schaltplänen elektronischer Komponenten des Objekts 2 abrufen. Der Benutzer des Hinweis-Handys 14 kann sich beim oben schon erwähnten Kühlhaus-Beispiel über die Zentralstation 28 z. B. über die Art und Menge der momentan gelagerten Waren informieren.

Alternativ ist es natürlich auch möglich, daß die Handys 14, 19 direkt mit der Sende/Empfangseinrichtung 21 der Zentralstation 28 kommunizieren (nicht in der Zeichnung dargestellt). Ein Informationsabruf zwischen den Handys 14, 19 und der Zentralstation 28 kann beispielsweise auch über das Internet erfolgen.

Zusätzlich ist über die Zentralstation 28 eine Überwachung der korrekten Funktion der Übertragungseinrichtung 10, der Umsetzeinrichtung 11 sowie des Empfangs von ausgesendeten Hinweismeldungen durch die Handys 14, 19 möglich. Dazu ist die Übertragung über die Signalwege 12, 17 bzw. 20 so ausgelegt, daß ein Sendevorgang vom jeweiligen Empfänger durch eine Rückmeldung quittiert werden muß. Mittels einer derartigen Übertragungstechnik sind z.B. Routineabfragen der Umsetzeinrichtung 11 von der Zentralstation 28 möglich. Gleichzeitig kann dann, wenn die erforderliche Quittierung durch die Handybenutzer ausgelöst werden muß, sicher gestellt werden, daß die gesendeten Hinweismeldungen tatsächlich die Benutzer erreichen. Unterbleibt z. B. eine Quittierung des Benutzers des Hinweis-Handys 14, kann die Grafik 16 automatisch an alternative Hinweis-Handys (nicht dargestellt) versendet werden.

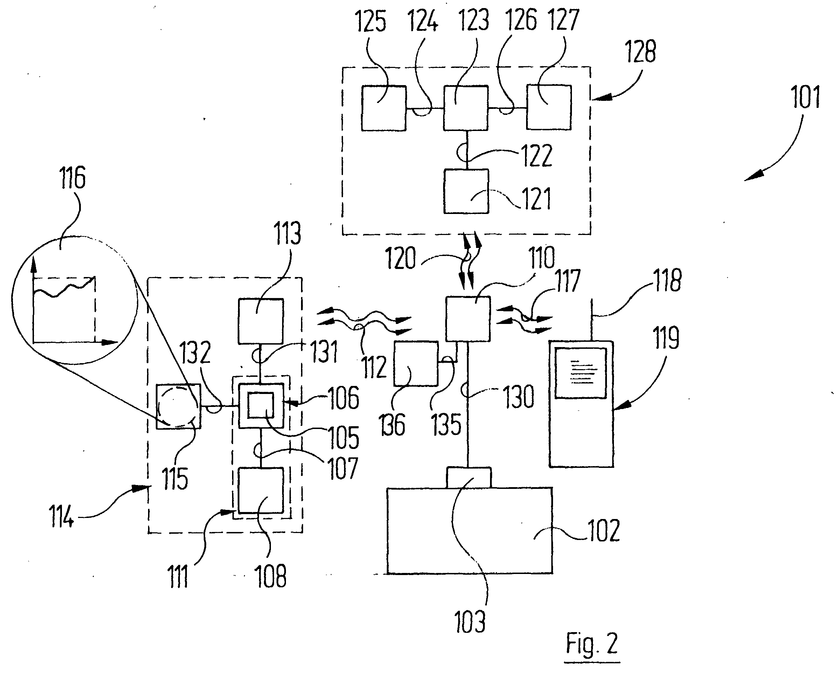

Eine alternative Ausgestaltung einer Überwachungseinrichtung zeigt Figur 2. Komponenten, die denjenigen entsprechen, die bereits im Zusammenhang mit Figur 1 erläutert wurden, tragen um 100 erhöhte Bezugszeichen und werden nicht nochmals im einzelnen beschrieben.

Bei der Überwachungseinrichtung 101 von Figur 2 steht der Sensor 103 nicht über eine Umsetzeinrichtung zur Auswahl einer graphischen Darstellung, sondern, abgesehen von einer Sensor-Schaltung (nicht dargestellt) zur Erzeugung von den gemessenen Zustandsparametern zugeordneten elektrischen Signalen, direkt mit der Übertragungseinrichtung 110 in Verbindung. Bei dieser Ausführungsform ist in jedem Handy 114, 119 eine Umsetzeinrichtung 111 integriert. Beispielhaft ist eine dieser Umsetzeinrichtungen 111 im in Figur 2 schematisch dargestellten Hinweis-Handy 114 detaillierter gezeigt:

Die Umsetzeinrichtung 111 ist mit der Antenne 113 des Hinweis-Handys 114 verbunden, die wiederum über den drahtlosen Signalweg 112 mit der Übertragungseinrichtung 110 in Verbindung steht. Die Umsetzeinrichtung 111 umfaßt die Vergleichs/Auswahleinrichtung 106 mit dem Mikroprozessor 105, die mit der Antenne 113 über eine Signalleitung 131 in Verbindung steht, sowie den Speicher 108. Das Display 115 des Hinweis-Handys 114 steht über eine Signalleitung 132 mit der Vergleichs/ Auswahleinrichtung 106 in Verbindung.

Die Übertragungseinrichtung 110 ist mit einem Zwischenspeicher 136 über eine Signalleitung 135 verbunden.

Die Überwachungseinrichtung 101 funktioniert folgendermaßen:
Die Übertragungseinrichtung 110 überträgt ständig oder in vorgegebenen Zeitabständen die vom Sensor 103 übermittelten Zustandsparameter-Daten an die Handys 114, 119 sowie an die Zentralstation 128.

In den einzelnen Handys 114, 119 erfolgt der Vergleich der empfangenen Zustandsparameter-Daten mit den im Speicher 108 abgelegten Toleranzwerten gemäß dem in Zusammenhang mit Figur 1 beschriebenen Vergleichsalgorithmus sowie die davon abhängige Auswahl der Grafik 116 aus dem Speicher 108.

Im Handy 119 erfolgt analog ein Vergleich empfangener Zustandsparameter-Daten sowie eine sich daran anschließende Textauswahl. Die in den jeweiligen Speichern der Handys 114, 119 abgelegten Toleranzwerte bzw. Grafiken/Texte können je nach Aufgabe bzw. Anwendung des Handys verschieden sein.

Der Zwischenspeicher 136 dient zum Zwischenspeichern von Zustandsparameter-Daten, z. B. in Fällen, in denen eine Übertragung auf den Signalwegen 112, 117 bzw. 120 nicht möglich ist.

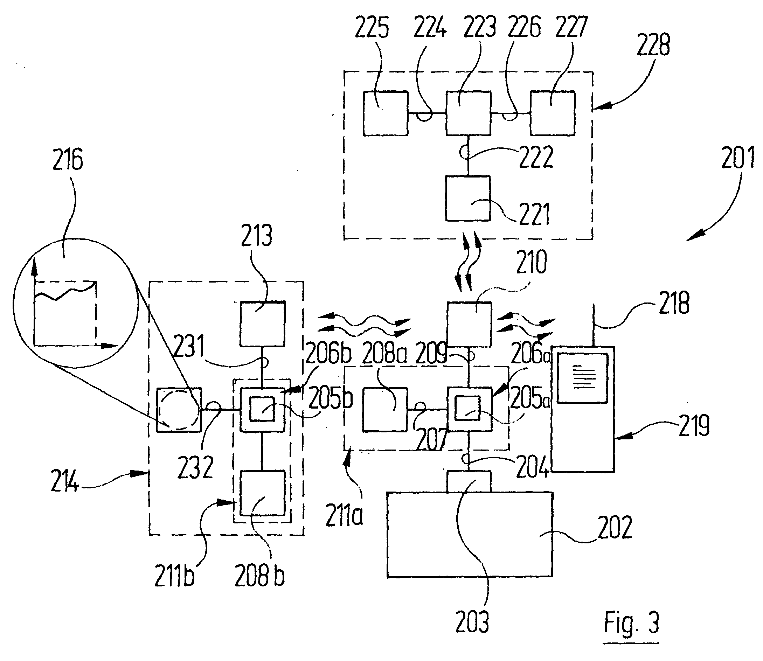

Eine dritte Variante einer Überwachungseinrichtung zeigt Figur 3. Hier sind die Funktionen "Datenvergleich" sowie "Grafik/Textauswahl" nicht in einer integralen Umsetzeinrichtung gebündelt, sondern es liegt eine Umsetzeinrichtung 211 vor, die in zwei räumlich getrennte Einheiten 211a (mit der Vergleichseinrichtung 206a) und 211b (mit der Auswahleinrichtung 206b) unterteilt ist.

Bei dieser Ausführungsform werden nur dann Zustandsparameter-Daten übertragen, wenn dies aufgrund des Verlassens eines vorgegebenen Parameter-Bereichs erforderlich ist.

Die Vergleichseinrichtung 206a der Umsetzeinheit 211a führt die Funktion "Datenvergleich" durch Abarbeitung des in Zusammenhang mit Figur 1 beschriebenen Vergleichsalgorithmus aus. Sie ist wie die Vergleichseinrichtung 6 in Figur 1 zwischen den Sensor 203 und die Übertragungseinrichtung 210 geschaltet. Die Umsetzeinheit 211a unterscheidet sich von der Umsetzeinrichtung 11 von Figur 1 dadurch, daß im Speicher 208a der Umsetzeinheit 211a nur die Toleranzwerte für die Zustandsparameter und keine Grafiken abgelegt sind. Im Unterschied zur Umsetzeinrichtung 11 von Figur 1 führt der Mikroprozessor 205a der Umsetzeinheit 211a nur den Vergleichsalgorithmus durch; eine Grafik/Text-Auswahl entfällt hier.

Zur Durchführung der Funktion "Grafikauswahl" weist das Handy 214 seinerseits die Umsetzeinheit 211b mit einer Auswahleinrichtung 206b auf, die in dort in gleicher Weise verschaltet ist, wie die Vergleichs/Auswahleinrichtung 111 der Ausführungsform nach Figur 2.

Die Überwachungseinrichtung 201 nach Figur 3 funktioniert folgendermaßen:
Die vom Sensor 203 erfaßten Zustandsparameter-Daten werden in gleicher Weise mit den abgespeicherten Toleranzwerten verglichen, wie im Zusammenhang mit Figur 1 beschrieben. Ergibt der Vergleich eine Überschreitung einer Toleranzgrenze, überträgt die Übertragungseinrichtung 210 die aktuellen Zustandsparameter-Daten an die Handys 214, 219 sowie die Zentralstation 228. Anhand der über die Antenne 213 empfangenen Zustandsparameter-Daten führt nun die Auswahleinrichtung 206b die Auswahl der entsprechenden Grafik 216 aus dem Grafikspeicher 208b durch, die dann, wie im Zusammenhang mit den Figuren 1 und 2 beschrieben, dargestellt wird.

Eine Überwachungseinrichtung mit einer Umsetzeinrichtung, die im Prinzip wie die in Figur 3 dargestellte Umsetzeinrichtung 211a, 211b aufgebaut ist, kann alternativ auch so eingesetzt werden, wie dies nachfolgend als viertes Ausführungsbeispiel beschrieben wird. Der Einfachheit halber erfolgt diese Beschreibung nochmals anhand von Fig. 3:
In der Vergleichseinrichtung 206a gemäß dieses Ausführungsbeispiels werden dann, wenn der Vergleich ergibt, daß ein vorgegebener Toleranzbereich verlassen wird, nicht die momentanen Zustandsparameter an die Übertragungseinrichtung 210 weitergeleitet, wie dies oben beschrieben wurde. Stattdessen wird mittels des Mikroprozessors 205a ein Code generiert, der einen bestimmten Zustand des zu überwachenden Objekts 202 repräsentiert.

Mittels der Übertragungseinrichtung 210 wird nun dieser Code an das Hinweis-Handy 214 und ggf. auch an die Zentralstation 228 und das Service-Handy 219 übertragen, wie dies im Zusammenhang mit den obigen Ausführungsbeispielen schon beschrieben wurde. Die Auswahleinrichtungen der Handys 214, 219 und der Rechner 223 der Zentralstation 228 sind mit einer Decodiereinrichtung versehen, die anhand des empfangenen Codes den momentanen Objektzustand angibt. Anhand dieses Objektzustands erfolgt dann die Grafikauswahl im Hinweis-Handy 14 bzw. die Initiierung von Informations- und Steuerungsschritten, wie oben beschrieben.

Zusätzlich zur reinen Grafik kann mittels der Auswahleinrichtungen 6; 106 bzw. 206b auch ein Applet, d.h. ein z.B. auf den Displays der Handys 14, 19; 114, 119; 214, 219 ausführbares Programm ausgewählt und zur Darstellung gebracht werden. Ein Applet kann beispielsweise in der dargestellten Grafik hervorrufen, daß die überschrittene Bereichsgrenze des Zustandsparameters y blinkt oder daß in einer Plandarstellung kritische Komponenten, z.B. Leitungen, auffällig dargestellt werden. Auch die oben erwähnte Umwandlung eines Eiskristalls in einen Tropfen kann durch ein Applet realisiert sein.

Für WAP-Handys sind Applets mit Hilfe der Internet-Programmiersprache JAVA erstellbar.

## Patentansprüche

1. Überwachungseinrichtung für mindestens einen Zustandsparameter eines Objekts mit mindestens einem Sensor zur Erfassung des Zustandsparameters und mindestens einer mit dem Sensor in Signalverbindung stehenden Übertragungseinrichtung für die gemessenen Zustandsparameter bzw. für Informationen, die diesen zugeordnet sind,
**gekennzeichnet durch**
mindestens eine Umsetzeinrichtung (11; 111; 211a, 211b), die die vom Sensor (3; 103; 203) empfangenen Zustandsparameter-Daten in grafische Darstellungen (16; 116; 216) umsetzt, und mindestens eine mit der Übertragungseinrichtung (10; 110; 210) drahtlos in Signalverbindung stehende Mobilfunkeinrichtung (14, 19; 114, 119; 214, 219), die ein Display (15; 115; 215) zur Ausgabe von grafischen Darstellungen (16; 116; 216) aufweist.

2. Überwachungseinrichtung nach Anspruch 1, **dadurch**
**gekennzeichnet, daß** die Umsetzeinrichtung (11; 111; 211a, 211b) aufweist: einen Speicher (8; 108; 208a, 208b), in dem dem Zustandsparameter zugeordnete Toleranzwerte und eine Mehrzahl digitaler grafischer Darstellungen (16; 116; 216) abgelegt sind; eine Vergleichseinrichtung (6; 106; 206a), die mit dem Sensor (3; 103; 203) und dem Speicher (8; 108; 208a) in Signalverbindung steht und die vom Sensor (3; 103; 203) übermittelten Zustandsparameter-Daten mit den Toleranzwerten vergleicht; und eine Auswahleinrichtung (6; 106; 206b) zur vom Vergleichsergebnis abhängigen Auswahl der grafischen Darstellung (16; 116; 216) aus einem Speicher (8; 108; 208b).

3. Überwachungseinrichtung nach Anspruch 1 oder 2,
**dadurch gekennzeichnet, daß** die Umsetzeinrichtung (11) am Objekt angeordnet ist.

4. Überwachungseinrichtung nach Anspruch 1 oder 2,
**dadurch gekennzeichnet, daß** die Umsetzeinrichtung an (111) der mindestens einen Mobilfunkeinrichtung (114, 119) angeordnet ist.

5. Überwachungseinrichtung nach Anspruch 4, **dadurch gekennzeichnet, daß** die Übertragungseinrichtung (10; 110; 210) mit einem Zwischenspeicher (136) für zu übertragende Zustandsparameter-Daten zusammenarbeitet.

6. Überwachungseinrichtung nach Anspruch 2, **dadurch gekennzeichnet, daß** die Vergleichseinrichtung (206a) an dem Objekt (202) und die Auswahleinrichtung (206b) an der mindestens einen Mobilfunkeinrichtung (214, 219) angeordnet ist, wobei die Vergleichseinrichtung (206a) und die Auswahleinrichtung (206b) über die Übertragungseinrichtung (210) miteinander in Signalverbindung stehen.

7. Überwachungseinrichtung nach Anspruch 6, **dadurch gekennzeichnet, daß** die Übertragungseinrichtung (211) zur Übertragung von Codes ausgeführt ist, die von der Vergleichseinrichtung erzeugt wurden.

8. Überwachungseinrichtung nach einem der vorhergehenden Ansprüche, **dadurch gekennzeichnet, daß** die den Zustandsparametern zugeordneten Informationen oder die Codes, die von der Übertragungseinrichtung (10; 110; 210) übertragen werden, Applets umfassen.

9. Überwachungseinrichtung nach einem der vorhergehenden Ansprüche, **dadurch gekennzeichnet, daß** die grafischen Darstellungen Piktogramme sind.

10. Überwachungseinrichtung nach einem der vorhergehenden Ansprüche, **dadurch gekennzeichnet, daß** die Mobilfunkeinrichtung (14, 19; 114, 119; 214, 219) ein WAP-Handy ist.

11. Überwachungseinrichtung nach einem der Ansprüche 1 bis 9, **dadurch gekennzeichnet, daß** die Mobilfunkeinrichtung (14, 19; 114, 119; 214, 219) ein tragbarer Computer mit einem Funkmodem ist, insbesondere ein Laptop oder ein Palmtop.

12. Überwachungseinrichtung nach Anspruch 11, **dadurch gekennzeichnet, daß** der Computer einen digitalen Stift aufweist, der mit einem Display des Computers zusammenarbeitet.

13. Überwachungseinrichtung nach einem der vorhergehenden Ansprüche, **dadurch gekennzeichnet, daß** die mindestens eine Übertragungseinrichtung (10; 110; 210) und/oder die mindestens eine Mobilfunkeinrichtung (14, 19; 114, 119; 214, 219) mit einer Zentralstation (28; 128; 228) zur Datendokumentation in Signalverbindung steht.

14. Überwachungseinrichtung nach Anspruch 13, **dadurch gekennzeichnet, daß** die Zentralstation (28; 128; 228) einen Datenbankspeicher (27; 127; 227) zur Ablage von zusätzlichen Objektinformationen aufweist.

15. Überwachungseinrichtung nach einem der vorhergehenden Ansprüche, **dadurch gekennzeichnet, daß** einerseits die Übertragungseinrichtung (10; 110; 210) und/oder die Mobilfunkeinrichtung (14, 19; 114, 119; 214, 219) und andererseits die Zentralstation (28; 128; 228) so ausgeführt sind, daß die Signalverbindung und der Informationsabruf über das Internet erfolgen.
